# NOUVEAU FASCICULE DE BREVET EUROPEEN

(11) **EP 2 041 365 B2**
(45) Date de publication et mention de la décision concernant l'opposition: **21.08.2019**
(45) Mention de la délivrance du brevet: 11.04.2012
(21) Numéro de dépôt: 07823579.3
(22) Date de dépôt: 12.07.2007
(51) Int. Cl.: D21H 27/00, D21H 21/40

(54) **FEUILLE HYBRIDE, NOTAMMENT DE SECURITE, FORMEE D'UN ASSEMBLAGE D'UNE PARTIE FIBREUSE ET D'UNE PARTIE PLASTIQUE**
AUS EINEM FASERTEIL UND EINEM KUNSTSTOFFTEIL GEFORMTE HYBRIDFOLIE, Z.B. EINE SICHERHEITSFOLIE
HYBRID FOIL, SUCH AS SECURITY FOIL, FORMED BY ASSEMBLING A FIBROUS PART AND A PLASTIC PART

(30) Priorité: 13.07.2006 FR 0606452
(43) Date de publication de la demande: 01.04.2009
(73) Titulaire: Oberthur Fiduciaire SAS, 75008 Paris (FR)
(72) Inventeur: ROSSET, Henri, F-38730 Le Pin (FR); CHARIGNON, Sébastien, F-38490 Saint Ondras (FR)
(74) Mandataire: Nony
(86) Numéro de dépôt international: PCT/FR2007/051658
(87) Numéro de publication internationale: WO 2008/007035

(56) Documents cités:
- EP-A1- 0 059 056
- EP-A1- 0 229 645
- WO-A-00/50238
- WO-A-94/20679
- WO-A-98/13211
- WO-A1-95/10419
- WO-A1-2004/076198
- WO-A1-2006/066431
- WO-A2-03/054297
- WO-A2-2004/028825
- FR-A- 2 764 314
- GB-A- 2 267 253

## Description

L'invention concerne une feuille hybride, notamment de sécurité, formée d'un assemblage d'une partie fibreuse et d'une partie plastique.

L'invention est en particulier destinée à une application aux billets de banque qui doivent être résistants à la circulation et qui sont réalisés notamment par impression offset et par impression taille-douce nécessitant des pressions élevées.

Dans la demande de brevet WO95/09274, on a décrit un papier de sécurité possédant une fenêtre traversante transparente en plastique obtenu en insérant un film plastique entre deux jets de matière fibreuse. On forme un trou traversant respectivement dans deux jets de papier en cours de formation, à l'aide de parties en relief intégrées à la toile d'une machine à papier à formes rondes, ces reliefs empêchant le dépôt de fibres papetières à certains endroits lors de la formation du jet de papier, puis on insère une bande en plastique transparent lorsqu'on réunit les deux jets de papier de manière à mettre en regard le trou d'un jet avec celui de l'autre jet et à faire passer la bande plastique à l'endroit des trous superposés.

Dans la demande de brevet FR2764314, on a décrit une feuille comportant au moins une fenêtre traversante et transparente ou translucide, en particulier la fenêtre peut être réalisée par insertion d'une bande entre deux feuilles, notamment comme décrit dans le document WO95/09274 mentionné ci-dessus, la fenêtre pouvant coopérer avec un élément porté sur le reste de la feuille lorsqu'on la plie pour créer une authentification. De la même façon, la demande de brevet WO03054297 décrit une ouverture crée pendant la formation du papier et qui présente dans les zones de bord des irrégularités caractéristiques. Cette ouverture peut être recouverte sur l'une ou les deux faces du papier, d'une feuille de plastique, ce qui permet d'obtenir une fenêtre transparente.

Les feuilles en papier pour faire des documents de sécurité ont l'avantage de bien s'imprimer et d'avoir une bonne résistance à la déchirure amorcée, en particulier les billets de banque traditionnels dont l'âme est en fibres de coton ont une grande résistance à la déchirure qui provient de l'effet conjugué de la longueur des fibres de coton, de leur résistance intrinsèque et de leur enchevêtrement au sein de la feuille. Toutefois leurs autres caractéristiques de résistance à la circulation peuvent être un peu faibles.

Dans la demande de brevet EP0935535, on a décrit un document de sécurité et notamment un billet de banque en plastique à base d'un film polymère transparent, couché sur chacune de ses faces avec au moins une couche d'encre opacifiante, en laissant sur l'une des faces une zone non-couchée qui forme ainsi une fenêtre, et de telle sorte que les éléments de sécurité contenus dans l'âme plastique soient visibles sur cette face. Ces documents se caractérisent par une fenêtre bien définie et présentent de plus l'intérêt d'être résistants à la circulation grâce notamment à leur faible porosité, à leur résistance à l'humidité, aux graisses ou aux autres agents pouvant accélérer le vieillissement des documents.

La demande de brevet GB 2 267 253 décrit un ticket de sécurité comportant une partie en papier assemblée à l'aide d'un adhésif à une partie en plastique.

La demande de brevet WO 00/50238 décrit un procédé de fabrication de produits de sécurité multicouche à l'aide d'une pluralité de rouleaux d'une machine papetière, les produits étant destinés à être personnalisés à l'aide d'un laser.

Toutefois un premier inconvénient des documents en plastique est qu'ils sont beaucoup moins résistants à la déchirure amorcée que les feuilles en papier. Un film en plastique ne possède pas ces caractéristiques de résistance apportées par les fibres, ce qui implique qu'une déchirure amorcée dans un tel film se propage beaucoup plus facilement que dans une feuille de matière fibreuse.

Un autre inconvénient des feuilles de sécurité à base plastique est qu'elles ne sont pas bien adaptées à l'impression par taille-douce qui nécessite des pressions élevées. En effet, le plastique a une compressibilité largement inférieure à celle du papier, ce qui conduit à une impression taille-douce très plate et sans relief. Ceci constitue un inconvénient non négligeable dans la mesure où le procédé d'impression taille-douce est très couramment utilisé dans le domaine des documents de sécurité et notamment des billets de banque.

Un autre inconvénient est que la tenue des impressions se dégrade lors de la manipulation du document en plastique, notamment au niveau de la pliure si le document est amené à être souvent plié ou froissé comme c'est le cas des billets de banque lors de leur circulation. De plus, le pli reste plus marqué pour un billet en plastique que pour un billet en papier.

Enfin, la réalisation de filigranes des feuilles de sécurité à base plastique reste malaisée, ce qui prive les documents de sécurité en plastique d'un type d'élément de sécurité efficace, couramment et notoirement utilisé dans le domaine des documents de sécurité.

Un premier but de l'invention est de fournir une feuille ou un document présentant des caractéristiques nouvelles et améliorées, permettant son authentification et sa sécurisation, de sorte qu'il soit particulièrement difficile à contrefaire.

Un second but de l'invention est de fournir une feuille, notamment de sécurité, offrant une résistance accrue à la circulation, c'est-à-dire à la fois aux contraintes mécaniques telles que le pli, l'allongement ou la déchirure, en particulier la déchirure amorcée et aux contraintes d'usage telles que la salissure ou le jaunissement.

Un autre but de l'invention est de fournir une feuille ou un document, notamment de sécurité, ayant un rendu d'impression élevé notamment en impression en offset et/ou en taille-douce.

La Demanderesse a trouvé que les buts de l'invention sont atteints en fournissant une feuille hybride en partie fibreuse et en partie plastique.

L'invention a ainsi pour objet une feuille selon la revendication 1 ou 2.

La feuille selon l'invention présente l'avantage de pouvoir être authentifiée tactilement par la différence du toucher de la matière fibreuse, notamment d'un papier, et du toucher de la matière plastique accessible notamment sur le bord de la feuille. Cet avantage est d'autant plus renforcé que la surface en matière plastique et/ou en matière fibreuse est suffisamment étendue et/ou située de façon à être perceptible au toucher et donc différentiable du reste du document lors de sa manipulation.

La feuille selon l'invention présente éventuellement aussi la possibilité d'une reconnaissance auditive par le bruit respectif de chaque partie émis lorsqu'on fait claquer la feuille, le claquant de la partie fibreuse, notamment d'un papier par exemple, étant différent de celui d'un plastique.

De plus, en comparaison d'une feuille entièrement en matière plastique, la feuille selon l'invention présente une durabilité mécanique améliorée, en particulier dans la zone de recouvrement où elle cumule la bonne résistance à la déchirure amorcée du papier et la bonne résistance à la déchirure non amorcée du plastique.

Cette caractéristique est particulièrement intéressante lorsque la feuille est amenée à être pliée, comme par exemple pour un billet de banque. Dans un tel cas, la feuille présente une zone de dégradation correspondant à la zone de pliage, généralement une zone médiane. Il est alors avantageux que la zone médiane soit réalisée en matière fibreuse, la zone en matière plastique se trouvant ainsi décentrée par rapport à la zone médiane.

De préférence, notamment lorsqu'il s'agit d'un document de sécurité tel un billet de banque, la feuille selon l'invention a la forme d'un quadrilatère, plus particulièrement un rectangle ou un carré, dont la longueur de chacun des côtés est d'au moins 50 mm et d'au plus 200 mm.

De préférence, la zone en matière plastique exempte de matière fibreuse est telle que sa surface est supérieure à 1 cm2, de préférence supérieure à 3 cm2, et qu'au moins en un point, sa largeur présente une valeur strictement supérieure à 10mm, de préférence supérieure ou égale à 15mm, plus préférentiellement encore supérieure ou égale à 20mm. Ceci permet notamment de faciliter la différence de perception tactile et visuelle entre les parties fibreuse et plastique de la feuille.

De préférence, ladite zone transparente ou translucide de la partie en matière plastique est située dans la zone latérale de la feuille.

Selon un cas particulier de l'invention, la zone de recouvrement de ladite feuille représente une zone avec des dimensions délimitées, inférieures à celles respectivement de chacune des matières fibreuse et plastique, en particulier une dimension comprise entre 1 et 50 % d'une des dimensions du format de la feuille, plus particulièrement entre 2 et 15 %. De préférence et selon les dimensions respectives des parties plastique et fibreuse, la zone de recouvrement est telle que chacun de ses dimensions est supérieure à 5mm, en particulier supérieure ou égale à 10mm, de préférence supérieure ou égale à 20mm, afin d'assurer une bonne résistance mécanique de cette jonction.

Selon un autre cas particulier de l'invention, la zone de recouvrement peut s'étendre jusqu'à la totalité de la surface de la partie en matière fibreuse, c'est-à-dire que la matière fibreuse peut être jusqu'à entièrement recouverte par la matière plastique et de plus il reste une partie de la matière plastique exempte de matière fibreuse (sans recouvrement avec la matière fibreuse) et qui forme au moins partiellement une zone latérale de la feuille.

Selon un cas préféré particulier, la partie plastique recouvre en continu la matière fibreuse dans la zone de recouvrement.

Selon un cas particulier de l'invention, la partie plastique recouvre de manière discontinue la matière fibreuse dans la zone de recouvrement.

Par exemple, la matière plastique s'étend de part et d'autre de la matière fibreuse, c'est-à-dire que la matière fibreuse est entièrement recouverte par la matière plastique et de plus la matière plastique s'étend au-delà d'au moins deux côtés de la partie fibreuse et forme ainsi au moins partiellement deux zones latérales de la feuille, voir trois ou quatre zones latérales, c'est-à-dire plusieurs bords de la feuille.

Selon un cas particulier de l'invention, la partie en matière plastique exempte de matière fibreuse représente entre 25 et 50 % de la surface totale de ladite feuille.

Plus particulièrement, la partie en matière plastique exempte de matière fibreuse représente entre 30 et 40 % de la surface totale de ladite feuille.

Selon un autre cas particulier encore de l'invention, la partie plastique exempte de matière fibreuse représente plus de 70 % de la surface totale de ladite feuille, la partie en matière fibreuse pouvant alors apparaître comme une inclusion à travers la partie plastique. En particulier, la partie en matière fibreuse peut être munie d'un filigrane, ce qui permet d'obtenir un niveau de sécurité élevé du document. Ceci permet notamment de fournir une feuille presque intégralement en plastique et munie d'un filigrane, alors qu'il est difficile de réaliser des filigranes dans le plastique.

De préférence encore, la feuille hybride selon l'invention est telle que les parties en matière plastique et en matière fibreuse, notamment de papier, se superposent de part et d'autre dans la zone de recouvrement. Ceci permet d'assurer une meilleure cohésion de ladite feuille et de renforcer la solidité de la jonction entre la partie fibreuse et la partie plastique.

Dans ce cas, selon un mode préférentiel de l'invention, la matière plastique se superpose de part et d'autre à la matière fibreuse, dans la zone de recouvrement. Ceci permet d'obtenir une feuille qui présente une bonne symétrie et une bonne planéité et ainsi d'éviter un gondolage ("curl") de ladite feuille.

Selon un autre mode de l'invention, la matière fibreuse se superpose de part et d'autre à la matière plastique, dans la zone de recouvrement.

Selon un cas particulier de l'invention, les parties fibreuse et/ou plastique présentent des découpes particulières qui leur permettent de former, seules ou en combinaison, au niveau de leur jonction, des motifs, symboles ou inscriptions. Dans un mode préféré de l'invention, la partie fibreuse présente une découpe particulière et la partie plastique est transparente au moins au niveau de la zone de recouvrement.

Selon un cas particulier et préféré de l'invention, la zone de recouvrement matière fibreuse - matière plastique ne présente pas de surépaisseur sensible, notamment à peine perceptible au toucher. Par exemple, la feuille a une épaisseur sensiblement constante et de l'ordre de 100µm pour faire un billet de banque. Plus particulièrement, au niveau de la zone de recouvrement, la matière fibreuse et/ou la matière plastique ont une épaisseur réduite par rapport à leur épaisseur respective du reste de la feuille. De préférence, les matières fibreuse et plastique ont toutes deux une épaisseur réduite au niveau de la zone de recouvrement. Par exemple, la partie fibreuse et la partie plastique ont une épaisseur respective de 100µm hors de la zone de recouvrement et une épaisseur de 50µm au niveau de la zone de recouvrement. Dans un autre exemple, la partie fibreuse et la partie plastique ont également respectivement une épaisseur de 100µm hors de la zone de recouvrement, et la partie plastique s'étend de part et d'autre de la partie fibreuse au niveau de la zone de recouvrement de sorte que dans ladite zone de recouvrement la partie fibreuse a une épaisseur de 50µm, et est entourée de part et d'autre par une feuille en plastique d'une épaisseur de 25µm.

Plus particulièrement selon l'invention, la matière fibreuse comporte une zone amincie au niveau de ladite zone de recouvrement, cette zone amincie pouvant être notamment un filigrane clair ou un filigrane à effet multiton composé de zones claires agencées de manière à constituer un motif tramé, ledit motif ayant une signification, notamment d'authentification. On a décrit de tel filigrane avec trame dans la demande de brevet EP 1122360. Cette zone amincie peut aussi être obtenue par des procédés d'écrasement, par exemple ladite zone de recouvrement amincie est une zone calandrée ou pressée.

Avantageusement, la feuille hybride selon l'invention est telle que la matière plastique et/ou la matière fibreuse, notamment de papier, comporte des perforations au moins au niveau de leur zone de recouvrement, les perforations pouvant éventuellement ne pas être totalement traversantes. Certaines desdites perforations ont de préférence une taille telle que les fibres de la matière fibreuse peuvent s'y enchevêtrer et permettent d'imbriquer les deux matières fibreuse et plastique, éventuellement munie(s) d'un adhésif, l'une dans l'autre et ainsi de renforcer la cohésion de la feuille. Ces perforations peuvent par exemples être réalisées soit par poinçonnage, par découpe à l'emporte pièce, au laser, par ultra-sons, ou par découpe avec un jet de fluide, notamment par jet d'eau

Les perforations peuvent avoir des formes et des dimensions diverses selon les effets recherchés. De préférence, afin d'assurer la liaison entre les parties fibreuse et plastique, au moins 50% desdites perforations ont une taille telle que chacune de ces perforations peut s'inscrire dans un cercle de diamètre supérieur à 0,05 mm. En particulier ce diamètre peut être compris entre 0,05 et 10 mm. De plus les perforations peuvent servir de code, de système d'authentification ou peuvent encore représenter un motif alphanumérique ou un dessin ou toute autre signification.

Selon un cas particulier de l'invention, lesdites perforations coopèrent avec des caractères visibles, mentionnés où apparaissant sur au moins l'une des faces de la feuille, pour former une information quand on plie la feuille.

Plus particulièrement, selon l'invention, lesdites perforations coopèrent avec des caractères visibles, mentionnés ou apparaissant sur la face recto de la feuille, pour former une première information quand on plie la feuille d'un côté, et coopèrent avec des caractères visibles, mentionnés ou apparaissant sur la face verso de la feuille, lesdits caractères étant identiques ou différents des caractères de la face recto, pour former une seconde information, identique ou différente de la première information, quand on plie la feuille de l'autre côté.

Par "visible", on entend que lesdits caractères sont directement perceptibles par l'oeil humain, mais également que lesdits caractères peuvent être rendus visibles par l'oeil humain à l'aide d'un appareil grossissant (loupe, microscope, compte-fils) et de plus éventuellement après excitation sous un rayonnement, notamment ultra-violet ou infra-rouge.

Dans le cas particulier où la matière plastique comprend une zone qui se superpose de part et d'autre à la matière fibreuse, notamment de papier, et que cette zone de recouvrement comporte des perforations, le plastique pourra alors diffuser à travers le papier et ainsi solidariser l'ensemble de la structure. La liaison à travers les perforations pourra être assurée soit par fusion/solidification du plastique, soit par réaction de deux produits qui se trouvent respectivement sur les faces des films ou couches plastiques mises en contact, par exemple un adhésif bicomposant ou un adhésif sensible à la pression, un adhésif à base d'isoprène naturel (caoutchouc naturel) ou synthétique ayant les propriétés de se sceller sur lui-même.

Dans la zone de recouvrement, l'adhésif et/ou la matière plastique peut contenir un ou plusieurs éléments de sécurité sur une ou sur les deux faces mises en contact avec l'autre support.

Selon un cas particulier, la partie en matière fibreuse est à base de fibres naturelles, notamment cellulosiques, en particulier du coton, et/ou de fibres synthétiques (par exemple des fibres de polyester ou de polyamide) et/ou éventuellement minérales.

Plus particulièrement, la partie en matière fibreuse est un papier ou un non-tissé.

Selon un cas particulier de l'invention, la matière plastique est un film de polymère, le cas échéant adhésivé, ledit film pouvant être laminé ou contrecollé par exemple.

Selon un autre cas particulier de l'invention, la matière plastique est une couche extrudée ou co-extrudée d'un ou plusieurs polymères.

Selon un cas particulier de l'invention, la matière plastique est à base d'un polymère transparent ou translucide, toutefois certains éléments notamment des éléments de sécurité peuvent être présents en masse et/ou surface de ladite matière plastique. Elle peut notamment comprendre des hologrammes ou autres éléments à effet optique, notamment variable.

Les polymères pouvant entrer dans la composition de la matière plastique, qui peut être une couche extrudée ou un film, peuvent être choisis notamment parmi les polymères suivants :
1) les résines polymérisées par addition telles que
   a) les résines polyoléfiniques pouvant avoir des densités variables et des degrés variables de ramifications telles que par exemple, le polyéthylène, le polypropylène, le polyméthylpentène
   b) les résines élastomères telles que par exemple, les éthylène-propylène-diène-monomères, le poly(acrylonitrile-butadiène-styrène), le poly(styrène-butadiène-styrène), le polybutadiène, le polyisoprène
   c) les résines vinyliques telles que par exemple, le poly(chlorure de vinyle), le poly(acétate de vinyle), le poly(éthylène-acétate de vinyle), le poly(éthylène-alcool vinylique)
   d) les résines halogénées telles que par exemple, le poly(chlorure de vinyle), le polychloroprène, le poly(chlorure de vinylidène), le polytétrafluoroéthylène
   d) les résines styréniques telles que par exemple, le polystyrène, le poly(styrène-acrylonitrile), le poly(styrène-butadiène-styrène)
   e) les résines acryliques telles que par exemple, le poly(méthacrylate de méthyle), le polyacrylonitrile, le poly(acrylonitrile-butadiène-styrène), le poly(éthylène-acrylate de méthyle)
   f) les résines ionomères
2) les résines polymérisées par condensation telles que :
   a) les résines polyesters telles que par exemple, le poly(éthylène téréphtalate), le poly(butylène téréphtalate), le poly(téréphtalate d'éthylène glycol), les glycérophtaliques,
   b) les résines polyamides
   c) les résines polycarbonates
   d) les résines polyuréthanes
   e) les résines polyimides
   f) les résines polyacétals, telles que par exemple le polyvinylbutyral
   g) les résines polyéthers, telles que par exemple le polyoxyméthylène
   h) les résines époxydes
   i) les résines aminoplastes
   j) les résines phénoplastes
   k) les résines silicones
3) les résines dérivées de la cellulose naturelle telles que :
   a) la viscose
   b) l'acétate de cellulose

On entend par polymères, des homopolymères, copolymères, copolymères greffés et leurs possibles mélanges. Ces polymères peuvent être thermoplastiques, élastomères, réticulés de façon inhérente, réticulés chimiquement, thermiquement ou par irradiation, saturés ou insaturés.

Selon un cas particulier de l'invention, la matière plastique comprend un ou des colorant(s) et/ou des pigments luminescents et/ou des pigments interférentiels, et/ou des pigments à cristaux liquides et/ou encore un matériau spécifique qui collecte la lumière (« guide d'onde »). De tels matériaux collecteurs de lumière luminescents pouvant convenir sont, par exemple, des films polymères à base de polycarbonate, appelés LISA® et commercialisés par la société BAYER.

Selon un cas particulier de l'invention, la matière plastique est un film multicouche interférentiel.

Selon un cas particulier de l'invention, la matière plastique est formée de deux couches polymères de couleurs et/ou de luminescences et/ou à effets interférentiels différents ou collecteurs de lumière luminescents.

Selon un cas particulier de l'invention, la partie en matière plastique est recouverte, sur au moins une partie, d'une couche imprimable et/ou favorisant l'adhésion d'encre. Par exemple, la partie en matière plastique peut recevoir un traitement notamment de type Corona, plasma ou flamme. La partie en matière plastique peut également être rendue imprimable par dépôt d'une couche améliorant l'imprimabilité à la surface de ladite partie en matière plastique. Par exemple, la partie en matière plastique peut être recouverte d'une couche contenant un liant tel qu'un polymère de styrène-butadiène et des charges minérales.

Selon un cas particulier de l'invention, la partie en matière plastique est recouverte sur au moins une partie d'une couche possédant des propriétés antisalissure et/ou d'imprimabilité. Par exemple, la partie en matière plastique peut être recouverte d'une couche transparente comprenant une silice colloïdale et un liant, par exemple un polyuréthane.

Selon un cas particulier de l'invention, ladite feuille est une feuille de sécurité comprenant au moins un élément de sécurité.

Selon un cas particulier de l'invention, ladite matière fibreuse contient des éléments de sécurité, notamment choisis parmi les filigranes, les planchettes, des fibres et/ou des pigments luminescents et/ou iridescents, des fils de sécurité, des fibres magnétiques et leurs mélanges.

Selon un cas particulier de l'invention, ladite matière plastique contient des éléments de sécurité, notamment choisis parmi les fibres et les pigments luminescents et/ou iridescents, des fibres magnétiques et leurs mélanges.

Selon un cas particulier de l'invention, ladite matière plastique est un collecteur de lumière luminescent situé dans une zone de la partie latérale de la feuille permettant ainsi d'observer la luminescence sur la tranche de la feuille.

Selon un cas particulier de l'invention, ladite matière plastique est un collecteur de lumière luminescent situé dans une zone transparente ou translucide qui comporte des motifs gravés, embossés, ou imprimés notamment en négatif en surface permettant d'observer la luminescence au moins au niveau des motifs.

Selon un cas particulier, ladite matière plastique comprend une puce, ladite puce étant par exemple insérée entre deux feuilles de matière plastique

L'invention concerne aussi un document de sécurité, notamment un billet de banque, comprenant une feuille telle que décrite précédemment.

L'invention fournit en outre une feuille de sécurité présentant des éléments de sécurisation et d'authentification intégrés ou appliqués sur les différentes matières qui la composent, c'est à dire dans la matière fibreuse, notamment le papier, et/ou dans la matière plastique, et/ou dans la /les couches éventuellement appliquées à la surface de la feuille.

La feuille de sécurité ainsi réalisée peut contenir différentes sortes d'éléments de sécurité et notamment des éléments de sécurité introduits dans la matière fibreuse, notamment à base de fibres cellulosiques, en partie humide d'une machine à papier tels que des planchettes, des fibres luminescentes colorées ou non (activables notamment sous UV), des pigments luminescents (fluorescents ou phosphorescents), des fibres métalliques et/ou magnétiques, des fibres électroconductrices, des fils de sécurité. Il peut s'agir, par exemple, de fils de sécurité magnétiques, luminescents, à effet optiquement variable, en particulier holographique, avec ou sans texte, apparaissant ou non en surface du papier, tel que par exemple un fil de sécurité apparaissant dans des fenêtres d'une feuille de papier, décrit dans la demande EP 0059056. D'autres éléments de sécurité tels qu'un filigrane, notamment un filigrane à effet multiton peuvent être ajoutés et constituer aussi des éléments de sécurisation de la partie en matière fibreuse. De même, on peut introduire des éléments de sécurité dans la matière plastique tels que des poudres et des fibres métalliques et/ou magnétiques, sensibles aux micro-ondes, des marqueurs visibles sous lumière UV, détectables par Infrarouge (proche ou lointain).

Dans le cas d'une feuille dont la partie fibreuse comprend deux jets, on peut introduire entre les deux jets un ou plusieurs éléments d'authentification comme des fils de sécurité ou des fibres magnétiques, comme par exemple un billet de banque bijet fabriqué à partir de feuilles de sécurité selon l'invention.

Lorsque la couche ou le film de polymère est transparent, un avantage apporté par une feuille de sécurité selon l'invention est que la couche ou le film de polymère n'altère pas l'observation des impressions et des éléments de sécurité présents sur la feuille. On peut alors envisager la formation au sein de la feuille de sécurité d'un filigrane classique dans la matière fibreuse, notamment ombré ou d'un filigrane à effet multiton autrement appelé « filigrane tramé » et décrit dans la demande de brevet EP 1122360, tous deux étant parfaitement observables en transvision.

De préférence, afin d'être transparente, la partie plastique aura une surface brillante. Il sera toutefois possible, notamment dans le cas d'une couche extrudée, d'avoir un plastique d'apparence satinée ou mate, voire texturée.

Selon un mode de réalisation de l'invention, diverses sécurités peuvent être combinées entre elles de façon à créer de nouvelles sécurités telles que des effets de profondeur ou des différences d'intensité ou de brillance par exemple. Ces effets sont obtenus, par exemple, en incorporant d'une part dans la partie fibreuse et d'autre part dans la partie plastique, des pigments fluorescents en quantités différentes.

Selon un cas particulier de l'invention, on réalise un filigrane dans le jet de papier et on intègre des particules fluorescentes dans une des couches de plastique. Ainsi, quand on regarde sous une lumière UV la face contenant les particules fluorescentes, on observe une fluorescence uniforme sur toute la surface ; en revanche si l'on observe l'autre face du billet, on distingue des différences d'intensité fluorescente au niveau du filigrane, permettant ainsi d'observer le filigrane en réflexion.

L'invention concerne aussi des procédés de réalisation d'une feuille hybride en partie fibreuse et en partie plastique.

Selon un cas particulier de l'invention, ladite feuille hybride peut être obtenue notamment par des procédés d'extrusion de la matière plastique que l'on viendra adjoindre à la matière fibreuse, notamment de papier.

La quantité extrudée dudit polymère peut, par exemple être comprise entre 2 et 20 g/m² et au niveau de la partie plastique dans la zone de recouvrement et entre 80 à 110 g/m², soit la totalité du grammage s'il s'agit d'un billet, dans la zone de la partie plastique exempte de matière fibreuse.

Selon un autre cas particulier de l'invention, ladite feuille hybride peut être obtenue, après fabrication de chacun des matériaux respectivement en matière fibreuse et plastique, notamment par contrecollage ou par lamination, notamment à chaud, d'un film plastique avec un substrat en matière fibreuse, notamment un papier.

Selon un autre cas particulier de l'invention, ladite feuille hybride peut être obtenue par association en ligne sur machine à papier, de chacun des matériaux respectivement en matière fibreuse, notamment de papier, et en matière plastique.

Un traitement d'activation peut être effectué à la surface de ladite matière plastique et/ou de la matière fibreuse, afin d'améliorer l'adhésion de la matière polymère à ladite matière fibreuse. Le traitement d'activation peut être par décharges électriques de type Corona, flamme ou plasma.

On peut aussi appliquer un primaire d'adhésion pour favoriser l'accroche de la matière plastique, notamment sous forme de film, sur ladite matière fibreuse, notamment un papier.

Dans le cas particulier et préféré où la feuille hybride comporte des perforations dans la zone de recouvrement matière fibreuse - matière plastique, lesdites perforations peuvent être réalisées préalablement à l'association des matières plastique et fibreuse, par différents moyens tels que le perçage, par exemple par poinçonnage, par découpe à l'emporte pièce, au laser, par un jet de fluide notamment par jet d'eau, par ultra-sons.

L'invention concerne également un document de sécurité comprenant la feuille sécurité ci-dessus. En particulier l'invention concerne un billet de banque.

L'invention concerne enfin un procédé d'authentification d'un document ou d'une feuilles tels que décrits précédemment, ladite feuille ou ledit document pouvant être authentifié par la différence de perception tactile entre les parties en matière fibreuse et plastique.

Divers modes de réalisations de l'invention sont présentés ci-après de manière non limitative, à l'appui des figures 1 à 19 en annexe.
Les figures 1 à 8 représentent une vue de face des feuilles 1 selon l'invention avec différentes configurations de la partie en matière fibreuse 2 et de la partie en matière plastique 3 apparaissant respectivement en grisé et en blanc ; la zone de recouvrement 4 n'est pas précisée sur ces figures.
Les figures 9 à 13 représentent, en coupe transversale, des feuilles 1 selon l'invention avec des détails sur la zone de recouvrement, l'échelle n'étant pas respectée pour plus de clarté.
Les figures 14 à 17 représentent une vue de face des feuilles 1 selon l'invention avec des détails sur les perforations 5 pouvant être faites notamment dans la zone de recouvrement 4, l'échelle n'étant pas respectée pour plus de clarté.
Les figures 18 et 19 représentent une vue de face des feuilles 1 selon l'invention avec une découpe particulière des parties plastique 2 et fibreuse 3 pour constituer un motif.

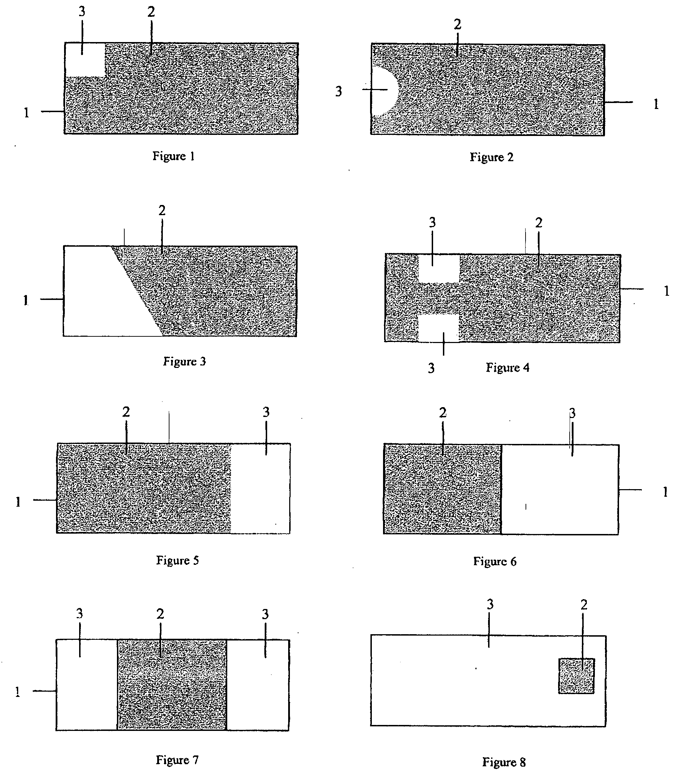

La feuille 1 peut se présenter, comme dans les figures 1 à 19, sous la forme d'un rectangle tel qu'un billet de banque, par exemple d'une longueur de 160 mm et d'une largeur de 72mm. Comme représenté sur les figures 1 à 8, les parties fibreuse 2 et plastique 3 peuvent présenter des formes et des dimensions très variées. En particulier, la partie plastique 3 peut constituer un coin du rectangle, comme illustré sur la figure 1. Dans une autre configuration, comme illustré sur la figure 8, la matière plastique 3 peut constituer l'essentiel de la feuille 1, la partie fibreuse apparaît comme une inclusion au sein de la feuille 1, dans une zone transparente, cette partie fibreuse 2 pouvant notamment comporter un filigrane observable à travers la partie plastique 3.

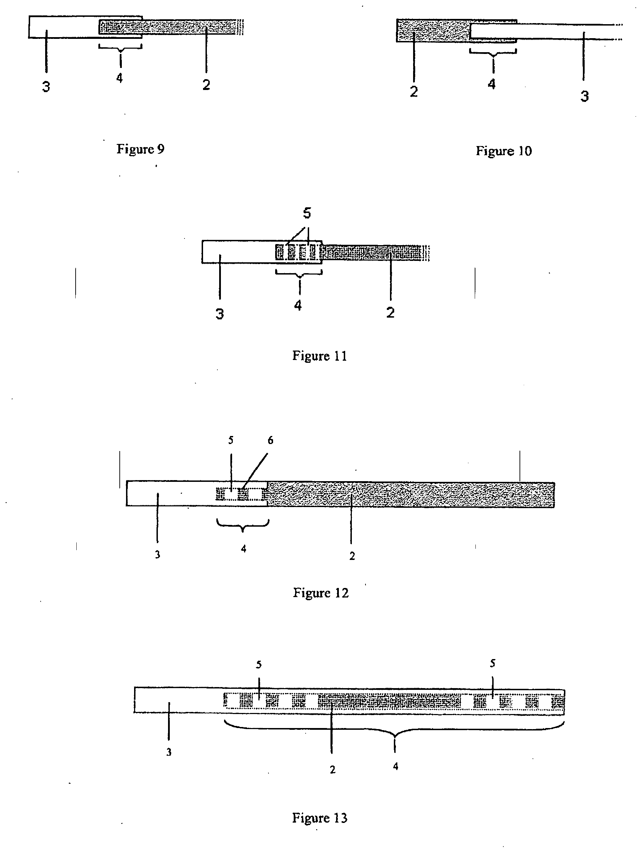

Les figures 9 à 13 permettent de présenter des détails de différentes variantes de la zone de recouvrement 4. Dans le cas où la feuille 1 présente les dimensions citées précédemment, la zone de recouvrement 4 peut présenter une largeur notamment d'au moins 3 mm, de préférence d'au moins 5 mm, en particulier comprise entre 5 et 15 mm, par exemple comprise entre 5 et 7 mm.

La figure 9 illustre une feuille 1 selon l'invention, dont la zone de recouvrement 4 est telle que la matière plastique 3 se superpose de part et d'autre à la matière fibreuse 2.

La figure 10 illustre un cas similaire à celui de la figure 9 mais qui diffère en ce que, dans la zone de recouvrement 4, c'est la partie fibreuse 2 qui se superpose de part et d'autre à la partie plastique 3.

La figure 11 présente une feuille 1 selon l'invention, dont la structure est semblable à celle illustrée sur la figure 9, mais dont la partie fibreuse 2 présente en outre des perforations circulaires 5, par exemple d'un diamètre de 100 µm, au niveau de la zone de recouvrement 4. Ces perforations 5 permettent d'assurer une bonne liaison entre les parties fibreuse 2 et plastique 3.

La figure 12 illustre une feuille 1 selon l'invention, semblable à celle présentée sur la figure 11, mais dont la partie fibreuse 2 munie de perforations circulaires 5 présente une zone amincie au niveau de la zone de recouvrement 4, ce qui permet d'obtenir une feuille 1 d'épaisseur sensiblement constante.

La figure 13 illustre une feuille 1 selon l'invention, dans laquelle la zone de recouvrement 4 et la partie fibreuse 2 sont confondues, la partie plastique 3 s'étendant sur toute la feuille et se superposant de part et d'autre de l'intégralité de la partie fibreuse 2. De plus, la partie fibreuse 2 est munie de zones perforées 5 situées sur les bords de ladite partie fibreuse.

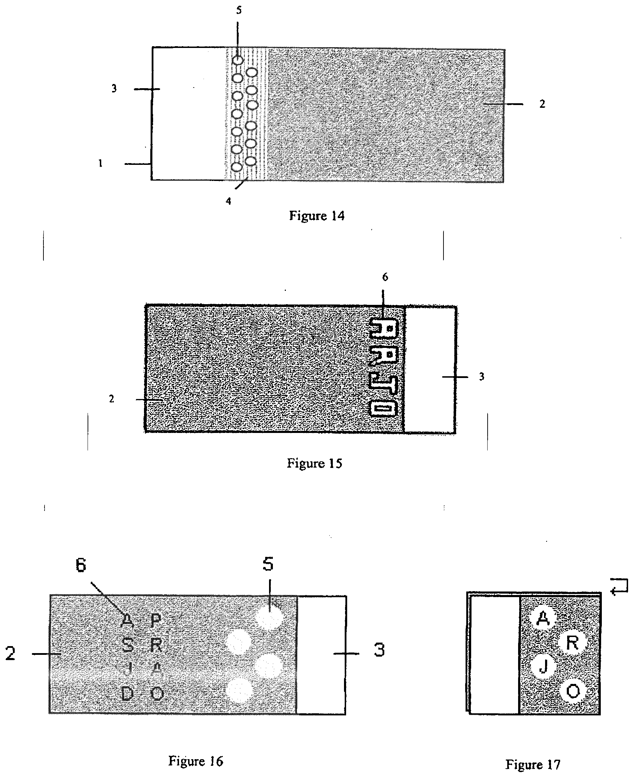

La figure 14 illustre une feuille 1 selon l'invention, dont la partie plastique 3, au niveau de la zone de recouvrement 4, se superpose de part et d'autre de la partie fibreuse 2, et présente, dans cette zone de recouvrement 4, des perforations 5.

La figure 15 illustre une feuille 1 selon l'invention, semblable à celle présentée à la figure 14, mais dans laquelle les perforations 5 ont la forme de plusieurs caractères alphanumériques.

Les figures 16 et 17 illustrent une feuille 1 selon l'invention, dont la partie plastique 3 se superpose de part et d'autre de la partie fibreuse 2 au niveau de la zone de recouvrement et est munie de perforations 5. De plus, sur le côté opposé aux perforations 5, des caractères sont imprimés sur la partie fibreuse 2, de sorte que lorsque l'on plie la feuille d'un côté, lesdites perforations 5 et lesdits caractères 6 coopèrent, pour former un élément d'authentification.

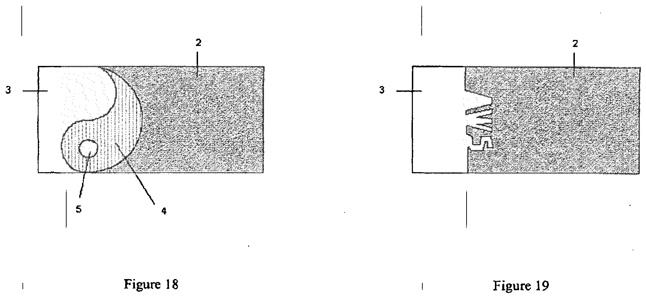

Les figures 18 et 19 illustrent des feuilles 1 dont la partie fibreuse 2 présente une découpe particulière, de façon à former, au niveau de la zone de recouvrement 4, un motif (fig 18) et une suite de caractères (fig 19).

## Revendications

1. Feuille (1) d'un format donné, ayant une face recto et une face verso, **caractérisée par le fait qu'**elle comporte au moins une partie en matière fibreuse (2) et au moins une autre partie en matière plastique (3), adjacente à la partie en matière fibreuse (2), les parties (2,3) étant jointes en une zone de recouvrement (4) des deux matières et ladite partie en matière plastique (3) formant au moins partiellement une zone latérale, exempte de matière fibreuse, de ladite feuille (1) et ladite partie en matière plastique (3) comportant au moins une zone transparente ou translucide,
la matière plastique se superposant de part et d'autre à la matière fibreuse au niveau de la zone de recouvrement (4), la matière fibreuse et/ou la matière plastique ayant au niveau de la zone de recouvrement (4), une épaisseur réduite par rapport à leur épaisseur respective du reste de la feuille (1).

2. Feuille (1) d'un format donné, ayant une face recto et une face verso, **caractérisée par le fait qu'**elle comporte au moins une partie en matière fibreuse (2) et au moins une autre partie en matière plastique (3), adjacente à la partie en matière fibreuse (2), les parties (2,3) étant jointes en une zone de recouvrement (4) des deux matières et ladite partie en matière plastique (3) formant au moins partiellement une zone latérale, exempte de matière fibreuse, de ladite feuille (1) et ladite partie en matière plastique (3) comportant au moins une zone transparente ou translucide, la matière fibreuse se superposant de part et d'autre à la matière plastique au niveau de la zone de recouvrement (4).

3. Feuille (1) selon la revendication 1 ou 2, **caractérisée en ce qu'**elle a la forme d'un quadrilatère, plus particulièrement un rectangle ou un carré, dont la longueur de chacun des côtés est d'au moins 50 mm et d'au plus 200 mm.

4. Feuille (1) selon l'une des revendications 1 à 3, **caractérisée par le fait que** ladite zone transparente ou translucide de la partie en matière plastique (3) est située dans la zone latérale de la feuille (1).

5. Feuille (1) selon l'une des revendications 1 à 4, **caractérisée en ce que** ladite zone latérale en matière plastique (3), exempte de matière fibreuse est telle que sa surface est supérieure à 1 cm2, de préférence supérieure à 3 cm2, et qu'au moins en un point, sa largeur présente une valeur strictement supérieure à 10mm, de préférence supérieure ou égale à 15mm, plus préférentiellement encore supérieure ou égale à 20mm.

6. Feuille (1) selon l'une des revendications 1 à 5, **caractérisée par le fait que** ladite zone de recouvrement (4) a des dimensions délimitées, inférieures à celles respectivement de chacune des parties matières fibreuse et plastique (2,3), en particulier une dimension comprise entre 1 et 50 % d'une des dimensions du format de la feuille (1), plus particulièrement entre 2 et 15 %.

7. Feuille (1) selon l'une des revendications 1 à 5, **caractérisée par le fait que** ladite zone de recouvrement (4) s'étend jusqu'à la totalité de la surface de la partie en matière fibreuse (2).

8. Feuille (1) selon l'une des revendications 1 à 7, **caractérisée par le fait que** la partie en matière plastique (3) exempte de matière fibreuse représente entre 25 et 50 % de la surface totale de ladite feuille (1).

9. Feuille (1) selon la des revendication 2, **caractérisée par le fait qu'**au niveau de la zone de recouvrement (4), la matière fibreuse et/ou la matière plastique ont une épaisseur réduite par rapport à leur épaisseur respective du reste de la feuille (1).

10. Feuille (1) selon la revendication 1 ou 8, **caractérisée par le fait que** la partie matière fibreuse (2) comporte une zone amincie au niveau de ladite zone de recouvrement (4), ladite zone amincie étant un filigrane clair ou un filigrane à effet multiton composé de zones claires agencées de manière à constituer un motif tramé.

11. Feuille (1) selon l'une des revendications 1 à 10, **caractérisée par le fait que** la feuille comprend, au moins dans la zone de recouvrement (4), des perforations (5) certaines desdites perforations (5) ayant de préférence une taille telle que les fibres de la matière fibreuse peuvent s'y enchevêtrer, lesdites perforations ayant leurs dimensions comprises entre 0,05 et 10 mm.

12. Feuille (1) selon la revendication 11, **caractérisée par le fait que** lesdites perforations (5) coopèrent, quand on plie la feuille d'un côté, pour former une première information avec des caractères (6) visibles, mentionnés ou apparaissant sur la face recto de la feuille (1), et coopèrent, quand on plie la feuille (1) de l'autre côté, avec des caractères (6) visibles, mentionnés ou apparaissant sur la face verso de la feuille (1), lesdits caractères étant identiques ou différents des caractères de la face recto, pour former une seconde information, identique ou différente de la première information.

13. Feuille (1) selon l'une quelconque des revendications 1 à 12, **caractérisée par le fait que** ladite partie en matière fibreuse (2) contient des éléments de sécurité, notamment choisis parmi les filigranes, les planchettes, les fibres et/ou les pigments luminescents et/ou iridescents et/ou magnétiques et/ou métalliques, des fils de sécurité et leurs mélanges, et/ ou **par le fait que** ladite partie en matière plastique (3) contient des éléments de sécurité, notamment choisis parmi les fibres et/ou les pigments luminescents et/ou iridescents, des fibres magnétiques et/ou métalliques et leurs mélanges.

14. Procédé de fabrication d'une feuille (1) telle que décrite dans l'une des revendications précédentes, dans lequel ladite feuille est (1) obtenue par extrusion de la matière plastique que l'on adjoint à la matière fibreuse, notamment un papier, ou dans lequel ladite feuille (1) est obtenue par contrecollage ou par lamination, notamment à chaud, d'un film plastique avec un substrat en matière fibreuse, notamment un papier.

## Patentansprüche

1. Blatt (1) von vorgegebenem Format, mit einer Vorderseite und einer Rückseite, **dadurch gekennzeichnet, dass** das Blatt mindestens einen Fasermaterialabschnitt (2) und mindestens einen anderen Plastikmaterialabschnitt (3) angrenzend an den Fasermaterialabschnitt (2) aufweist, wobei die Abschnitte (2, 3) in einer Überlappungszone (4) der beiden Materialien miteinander verbunden sind und der Plastikmaterialabschnitt (3) mindestens teilweise eine vom Fasermaterial freie seitliche Zone des Blatts (1) bildet und mindestens eine transparente oder durchscheinende Zone aufweist, wobei das Plastikmaterial im Bereich der Überlappungszone (4) das Fasermaterial beiderseits überlagert, und das Fasermaterial und/oder das Plastikmaterial im Bereich der Überlappungszone (4) eine bezüglich ihrer entsprechenden Dicke im Rest des Blatts (1) verringerte Dicke aufweisen.

2. Blatt (1) von vorgegebenem Format, mit einer Vorderseite und einer Rückseite, **dadurch gekennzeichnet, dass** das Blatt mindestens einen Fasermaterialabschnitt (2) und mindestens einen anderen Plastikmaterialabschnitt (3) angrenzend an den Fasermaterialabschnitt (2) aufweist, wobei die Abschnitte (2, 3) in einer Überlappungszone (4) der beiden Materialien miteinander verbunden sind und der Plastikmaterialabschnitt (3) mindestens teilweise eine vom Fasermaterial freie seitliche Zone des Blatts (1) bildet und mindestens eine transparente oder durchscheinende Zone aufweist, wobei das Fasermaterial im Bereich der Überlappungszone (4) das Plastikmaterial beiderseits überlagert.

3. Blatt (1) nach Anspruch 1 oder 2, **dadurch gekennzeichnet, dass** es ein Viereck, insbesondere ein Rechteck oder ein Quadrat bildet, von dem die Länge der jeweiligen Seiten mindestens 50 mm und höchstens 200 mm beträgt.

4. Blatt (1) nach einem der Ansprüche 1 bis 3, **dadurch gekennzeichnet, dass** die transparente oder durchscheinende Zone des Plastikmaterialabschnitts (3) in der seitlichen Zone des Blatts (1) angeordnet ist.

5. Blatt (1) nach einem der Ansprüche 1 bis 4, **dadurch gekennzeichnet, dass** die vom Fasermaterial freie seitliche Plastikmaterialzone (3) so ausgebildet ist, dass ihre Fläche mehr als 1 cm2, vorzugsweise mehr als 3 cm2 beträgt und ihre Breite mindestens an einem Ort einen Wert von jedenfalls mehr als 10 mm, vorzugsweise von 15 mm oder mehr, weiter bevorzugt von 20 mm oder mehr aufweist.

6. Blatt (1) nach einem der Ansprüche 1 bis 5, **dadurch gekennzeichnet, dass** die Überlappungszone (4) begrenzte Maße aufweist, die entsprechenderweise kleiner als die Maße des jeweiligen Fasermaterial- und Plastikmaterialabschnitts (2,3) sind, wobei ein Maß insbesondere zwischen 1 und 50% eines der Maße des Formats des Blatts (1), weiterhin insbesondere zwischen 2 und 15%, aufweist.

7. Blatt (1) nach einem der Ansprüche 1 bis 5, **dadurch gekennzeichnet, dass** sich die Überlappungszone (4) bis hin zur Gesamtheit der Fläche des Fasermaterialabschnitts (2) erstreckt.

8. Blatt (1) nach einem der Ansprüche 1 bis 7, **dadurch gekennzeichnet, dass** der von Fasermaterial freie Plastikmaterialabschnitt (3) zwischen 25 und 50% der Gesamtfläche des Blatts (1) darstellt.

9. Blatt (1) nach Anspruch 2, **dadurch gekennzeichnet, dass** das Fasermaterial und/oder das Plastikmaterial im Bereich der Überlappungszone (4) eine bezüglich ihrer entsprechenden Dicke im Rest des Blatts (1) verringerte Dicke aufweisen.

10. Blatt (1) nach Anspruch 1 oder 8, **dadurch gekennzeichnet, dass** der Fasermaterialabschnitt (2) im Bereich der Überlappungszone (4) eine verdünnte Zone aufweist, die ein helles Wasserzeichen oder ein Wasserzeichen mit Mehrtoneffekt ist, das aus hellen Zonen zusammengesetzt ist, die so angeordnet sind, dass ein gerastertes Motiv gebildet wird.

11. Blatt (1) nach einem der Ansprüche 1 bis 10, **dadurch gekennzeichnet, dass** es mindestens in der Überlappungszone (4) Perforationen (5) aufweist, von denen gewisse Perforationen (5) vorzugsweise eine solche Ausdehnung aufweisen, dass sich die Fasern des Fasermaterials dort verschlingen können, wobei die Perforationen Maße im Bereich zwischen 0,05 und 10 mm aufweisen.

12. Blatt (1) nach Anspruch 11, **dadurch gekennzeichnet, dass** die Perforationen (5) beim Falten des Blatts zu einer Seite zur Bildung einer ersten Information mit sichtbaren Zeichen (6) zusammenwirken, die auf der Vorderseite des Blatts (1) erscheinen oder wiedergegeben sind, und beim Falten des Blatts (1) zur anderen Seite mit sichtbaren Zeichen (6) zusammenwirken, die auf der Rückseite des Blatts (1) erscheinen oder wiedergegeben sind, wobei die Zeichen zu den Zeichen der Vorderseite identisch oder von ihnen verschieden sind, um eine zweite Information zu bilden, die mit der ersten Information identisch oder von ihr verschieden ist.

13. Blatt (1) nach irgendeinem der Ansprüche 1 bis 12, **dadurch gekennzeichnet, dass** der Fasermaterialabschnitt (2) Sicherheitselemente beinhaltet, insbesondere solche, die aus Wasserzeichen, Plättchen, Fasern und/oder Pigmenten, die lumineszieren und/oder schillern und/oder magnetisch sind und/oder metallisch sind, Sicherheitsfäden und ihren Mischungen ausgewählt sind, und/oder **dadurch gekennzeichnet, dass** der Plastikmaterialabschnitt (3) Sicherheitselemente enthält, insbesondere solche, die aus Fasern und/oder Pigmenten, die lumineszieren und /oder schillern, Fasern, die magnetisch und/oder metallisch sind, und ihren Mischungen ausgewählt sind.

14. Verfahren zur Herstellung eines Blatts (1) wie es in einem der vorhergehenden Ansprüche angegeben ist, wobei das Blatt (1) durch Extrudieren des Plastikmaterials, das dem Fasermaterial, insbesondere einem Papier angefügt wird, gewonnen wird, oder wobei das Blatt (1) durch Verkleben oder durch Laminieren, insbesondere unter Wärme, eines Plastikfilms mit einem Substrat aus Fasermaterial, insbesondere einem Papier gewonnen wird.

## Claims

1. A sheet (1) of a given size, having a rear face and a front face, **characterized in that** it comprises at least one part made from fibrous material (2) and at least one other part made from plastic material (3), which is adjacent to the fibrous part (2), said parts (2, 3) being joined at a zone (4) in which the two materials overlap, and the plastic part (3) at least partially forming a side zone of said sheet (1) that is free from fibrous material, and said plastic part (3) comprising at least one transparent or translucent zone, at the overlap zone (4), the plastic material overlaps on either side of the fibrous material or at the overlap zone (4), the fibrous material and/or the plastic material having at the overlap zone (4) a lower thickness than their respective thickness in the rest of the sheet (1).

2. A sheet (1) of a given size, having a rear face and a front face, **characterized in that** it comprises at least one part made from fibrous material (2) and at least one other part made from plastic material (3), which is adjacent to the fibrous part (2), said parts (2, 3) being joined at a zone (4) in which the two materials overlap, and the plastic part (3) at least partially forming a side zone of said sheet (1) that is free from fibrous material, and said plastic part (3) comprising at least one transparent or translucent zone, the fibrous material overlapping at the overlap zone (4) on either side of the plastic material.

3. The sheet (1) as claimed in claim 1 or 2, **characterized in that** it has the shape of a quadrilateral, more particularly a rectangle or a square, of which the length of each of the sides is at least 50 mm and at most 200 mm.

4. The sheet (1) as claimed in one of claims 1 to 3, **characterized in that** said transparent or translucent zone of the plastic part (3) is located in the side zone of the sheet (1).

5. The sheet (1) as claimed in one of claims 1 to 4, **characterized in that** said side zone made from plastic material (3), and free of fibrous material, is such that its area is larger than 1 cm2, preferably larger than 3 cm2, and that at least at one point, its width has a value strictly larger than 10 mm, preferably larger than or equal to 15 mm, even more preferably larger than or equal to 20 mm.

6. The sheet (1) as claimed in one of claims 1 to 5, **characterized in that** said overlap zone (4) has delimited dimensions, smaller than those respectively of each of the fibrous and plastic parts (2, 3), in particular a dimension of between 1 and 50% of one of the dimensions of the size of the sheet (1}, more particularly between 2 and 15%.

7. The sheet (1) as claimed in one of claims 1 to 5, **characterized in that** said overlap zone (4) extends over the whole surface of the fibrous part (2).

8. The sheet (1) as claimed in one of claims 1 to 7, **characterized in that** the plastic part (3), which is free of fibrous material, represents between 25 and 50% of the total surface of said sheet (1).

9. The sheet (1) as claimed in claim 2, **characterized in that** at the overlap zone (4), the fibrous material and/or the plastic material have a lower thickness than their respective thickness in the rest of the sheet (1).

10. The sheet (1) as claimed in claim 1 or 8, **characterized in that** the fibrous part (2) comprises a thinned zone at said overlap zone (4), said thinned zone being a light watermark or a multitone watermark composed of light zones arranged to constitute a halftone pattern.

11. The sheet (1) as claimed in one of claims 1 to 10, **characterized in that** the sheet, at least in the overlap zone (4) comprises perforations (5), some of said perforations (5) preferably having a size such that the fibers of the fibrous material can be entangled therein, said perforations (5) having dimensions of between 0.05 and 10 mm.

12. The sheet (1) as claimed in claim 11, **characterized in that** said perforations (5) cooperate, when the sheet is folded on one side, to form first data with visible characters (6), mentioned or appearing on the front face of the sheet (1) and cooperate, when the sheet (1) is folded on the other side, with visible characters (6), mentioned or appearing on the rear face of the sheet (1), said characters being identical to or different from the characters of the front face, to form second data, identical to or different from the first data.

13. The sheet (1) as claimed in any one of the claims 1 to 12, **characterized in that** said fibrous part (2) contains security elements, particularly selected from watermarks, plates, luminous and/or iridescent and/or magnetic and/or metal fibers and/or pigments, security threads and mixtures thereof, and/or said plastic part (3) contains security elements, particularly selected from luminous and/or iridescent fibers and/or pigments, magnetic and/or metal fibers and mixtures thereof.

14. A method for fabricating a sheet (1) as described in one of the preceding claims, in which said sheet (1) is obtained by extrusion of the plastic material which is added to the fibrous material, particularly a paper, or in which said sheet (1) is obtained by pasting or by lamination, particularly with heat, of a plastic film with a fibrous substrate, particularly a paper.
